# EUROPEAN PATENT APPLICATION

(11) **EP 4 693 068 A1**
(43) Date of publication of application: **11.02.2026**
(21) Application number: 25193269.5
(22) Date of filing: 31.07.2025
(51) Int. Cl.: G06F 16/3329, G06F 16/9032, G06F 16/9535

(54) **ADAPTIVE USER REPRESENTATION SYSTEM**

(30) Priority: 09.08.2024 US 202418799330
(71) Applicant: Microsoft Technology Licensing, LLC, Redmond, WA 98052 (US)
(72) Inventor: BONYADI, Mohammadreza, Redmond, Washington, 98052 (US); PERERA, Gonaduwage Don Marie Nirumi Shamelle, Redmond, Washington, 98052 (US); SAVAGE, Ross William, Redmond, Washington, 98052 (US); PARUCH, Malgorzata, Redmond, Washington, 98052 (US); COSESCU, Irina, Redmond, Washington, 98052 (US)
(74) Representative: CMS Cameron McKenna Nabarro Olswang LLP

(57) **Abstract**

An adaptive user representation (AUR) system for use with generative artificial intelligence (AI) receives queries meant for the generative AI and utilizes one or more AI models to process each query to determine query context and to identify user information from a user information repository which is relevant to the query. The system generates instructions based on the query, query context, and the relevant user information for causing the generative AI to generate a response to the query which is personalized to the user. The AUR system transforms the raw data of the query and relevant user information into a set of instructions for the generative AI which describe how to personalize the response or required searches to ensure the final response is personalized.

## Description

### BACKGROUND

Users are inundated with digital information, from non-stop emails and chats to complex personal preferences and a growing web of digital connections. This information overload masks relevant information in a flood of noise, making it difficult to remember important details, and reducing our ability to focus. One solution to this information overload lies in personalization, i.e., tailoring the digital environment to highlight relevant information based on the user's needs, preferences, and goals. Personalization improves user engagement with artificial intelligence (AI) assistants by making the experience more intuitive and relevant.

However, personalization of AI assistant responses requires that the AI assistant model have access to user information and context. When an AI assistant has access to user information and context, the AI assistant is capable of generating very useful responses to general inquiries. For example, when a user submits a query to an AI assistant, such as "Find a restaurant for me and my family for a lunch on Saturday." An AI assistant having access to user information and context can generate a detailed, user-specific response, such as "Here are restaurants that are open on Saturday, close to your house, and accommodate the environment and diet you usually follow."

Therefore, one important factor in the performance of AI assistant systems is having access to user's information when generating responses to queries. Vast amounts of information are currently being gathered for each user through interactions with various software applications, social media platforms, and communication/collaboration systems. However, directly integrating this extensive amount of information into AI assistants can be costly as it is performed for every query. In addition, not all user information is relevant to a user's needs within the AI assistant experience. Therefore, simply including as much user information as possible with each prompt is an inefficient use of AI assistant time and resources. Moreover, current AI assistant systems are generally not capable of determining what user information would be most beneficial for an AI assistant to have access to in generating a personalized response to a given query.

Hence, what is needed is a system and method of providing relevant user information to AI assistants for personalized responses that does not suffer from the limitations of the prior art.

### SUMMARY

In one general aspect, the instant disclosure presents a data processing system having a processor and a memory in communication with the processor wherein the memory stores executable instructions that, when executed by the processor alone or in combination with other processors, cause the data processing system to perform multiple functions. The functions include receiving a query from a user via an artificial intelligence (AI) assistant client of an AI assistant system; providing the query to a query context determining model of an adaptive user representation (AUR) system, the query context determining model being trained to process the query to determine a query context for the query; providing the query context to a user information retrieval model of the AUR system, the user information retrieval model being trained to process the query context to identify relevant user information for the query and to retrieve the identified relevant user information from a user information repository for the user; providing the query, the query context, and the identified relevant user information to an instruction generating model of the AUR system which is trained to generate instructions for an AI assistant model of the AI assistant system with reference to the query, the query context, and the identified relevant user information; and delivering the instructions to the AI assistant model, the AI assistant model being trained to process the instructions to generate a response to the query.

In yet another general aspect, the instant disclosure presents a method of augmenting queries to an Artificial Intelligence (AI) assistant system. The method includes receiving a query from a user via an artificial intelligence (AI) assistant client of the AI assistant system; providing the query to a query context determining model of an adaptive user representation (AUR) system, the query context determining model being trained to process the query to determine a query context for the query; providing the query context to a user information retrieval model of the AUR system, the user information retrieval model being trained to process the query context to identify relevant user information for the query and to retrieve the identified relevant user information from a user information repository for the user; providing the query, the query context, and the identified relevant user information to an instruction generating model of the AUR system which is trained to generate instructions for an AI assistant model of the AI assistant system with reference to the query, the query context, and the identified relevant user information; and delivering the prompt to the AI assistant model, the AI assistant model being trained to process the instructions to generate a response to the query.

In a further general aspect, the instant application describes a non-transitory computer readable medium on which are stored instructions that when executed cause a programmable device to perform functions of receiving a query from a user via an artificial intelligence (AI) assistant client of an AI assistant system; providing the query to a query context determining model of an adaptive user representation (AUR) system, the query context determining model being trained to process the query to determine a query context for the query; providing the query context to a user information retrieval model of the AUR system, the user information retrieval model being trained to process the query context to identify relevant user information for the query and to retrieve the identified relevant user information from a user information repository for the user; providing the query, the query context, and the identified relevant user information to an instruction generating model of the AUR system which is trained to generate instructions for an AI assistant model of the AI assistant system with reference to the query, the query context, and the identified relevant user information; and delivering the prompt to the AI assistant model, the AI assistant model being trained to process the prompt to generate a response to the query.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Furthermore, the claimed subject of this disclosure.

### BRIEF DESCRIPTION OF THE DRAWINGS

The drawing figures depict one or more implementations in accord with the present teachings, by way of example only, not by way of limitation. In the figures, like reference numerals refer to the same or similar elements. Furthermore, it should be understood that the drawings are not necessarily to scale.
FIG. 1 depicts an example computing environment upon which aspects of this disclosure may be implemented.
FIG. 2 depicts an example implementation of an artificial intelligence (AI) assistant system which may be implemented in the environment of FIG. 1.
FIG. 3 depicts an example implementation of an AI assistant client of the AI assistant system of FIG. 2.
FIG. 4A depicts an example implementation of an adaptive user representation (AUR) system for the AI assistant system of FIG. 2.
FIG. 4B depicts another example implementation of an adaptive user representation (AUR) system for the AI assistant system of FIG. 2.
FIG. 5 shows a flowchart of a method of generating instructions for generative AI, such as an AI assistant using the AUR system of FIG. 3.
FIG. 6 is a block diagram showing an example software architecture, various portions of which may be used in conjunction with various hardware architectures herein described, which may implement any of the described features.
FIG. 7 is a block diagram showing components of an example machine configured to read instructions from a machine-readable medium and perform any of the features described herein.

### DETAILED DESCRIPTION

AI assistant systems are capable of generating personalized responses when AI assistants are provided with user information to take into consideration in generating responses to queries. A vast amount of information is currently being gathered for each user through interactions with and through various online platforms and applications. Directly integrating this extensive amount of information into AI assistants can be prohibitively expensive because it is performed for every query. Furthermore, not all information is relevant to a user's needs within the AI assistant experience. As such, simply including as much user information as possible with each prompt can be an inefficient use of time and resources. Thus, there exists a technical problem of current AI assistant systems being incapable of determining what user information would be most beneficial to have access to in generating a personalized response to a given query.

To address these technical problems and more, in an example, this description provides technical solutions in the form of an adaptive user representation (AUR) system for use with generative artificial intelligence (AI) systems and services, such as an AI assistant which is trained to answer questions, summarize content, set reminders, send messages, search the internet, obtain directions, find commercial establishments (e.g., restaurants and businesses), and the like. The AUR system receives queries and requests for information (referred to herein collectively as "user queries" or simply "queries") from a user which are intended for the AI assistant service, and the AUR system utilizes AI to process the queries to determine the context of the queries (i.e., the purpose/reason behind the queries) and to retrieve user information which may be relevant to the queries based on the context. In other words, the AUR system enables AI assistant output to be grounded by anchoring the responses to user-specific information so that the output is personalized to the user. This also reduces the chances of the AI assistant generating bad, useless, and otherwise incorrect output (i.e., hallucinating). To this end, the AUR system maintains or has access to a repository of user information. As used herein, "user information" can include substantially any information pertaining to a user including personal information, such as birthday, place of birth, current residence, personal contacts, hobbies, interests, calendar events, personal schedule, and the like, and work-related information, such as employer, work contacts, work projects, work calendar, meeting schedule, and the like. Collected information can include user interactions with applications, documents generated or collaborated on by a user, user information posted to social media, communication information sent and received by a user (e.g., emails, messages, etc.), previous interactions with the AI assistant, responses to inquiries received from the AI assistant, data collected from other sources (e.g., third party sources), and the like. The amount of information stored in a repository can be very large. Accordingly, user information can be stored in free-form and/or schematized formats and can include metadata, tags, and other information which defines, describes, and organizes the data.

The AUR system utilizes one or more AI models to process each query to determine query context (i.e., the purpose or reason behind the query) and to identify and retrieve user information from the user information repository which is relevant to the query. For example, a context determining model may be trained to learn rules for determining the context (e.g., intent or purpose) of a query, and an information retrieval model can be trained to learn rules for selecting relevant personal information pertaining to a query based on the query context. Once the query context and relevant user information has been determined, the system generates instructions for the AI assistant based on the query, query context, and the relevant user information for causing the AI assistant to generate a response to the query which is personalized to the user. To this end, the AUR system includes an instruction generating model which is trained to process the raw data of the query, query context, and relevant user information and transform this raw data into a set of instructions for the AI assistant which describe how to personalize the response or required searches to ensure the final response is personalized. The instructions are generated with the formatting and structure required by the AI assistant.

This provides technical advantages by enabling context and relevant user information in the form of raw data to be processed and transformed into instructions for generative AI which can provide guidance to the AI as to what to search for in generating a response, what information to use in grounding (e.g., personalizing) the response, how to use the grounding data correctly, and how to present the response. This enables the AI assistant to behave in a more personal manner to the user and generate more personalized responses. In various implementations, the context determining, information retrieval, and query generating models comprise generative language models, such as Large Language Models (LLMs), Generative Pre-trained Transformer (GPT)-based models (e.g., GPT-3, GPT-4, GPT-4o, ChatGPT), or the like. The AUR system can be integrated into an AI assistant system in various ways, e.g., as a skill, using prompt injection techniques, and/or as part of an enterprise search service.

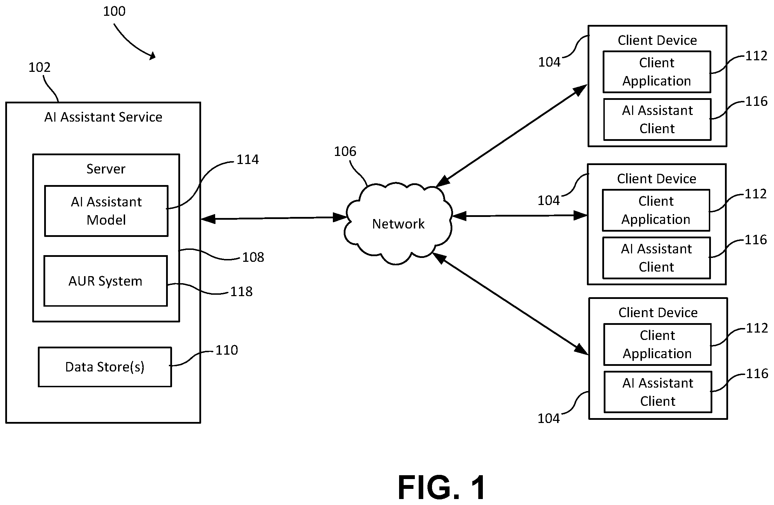

FIG. 1 shows an example computing environment 100 in which aspects of the disclosure may be implemented. Computing environment 100 includes an AI assistant service 102 and client devices 104 which communicate with each other via a network 106. The network 106 includes one or more wired, wireless, and/or a combination of wired and wireless networks. In embodiments, the network 106 includes one or more local area networks (LAN), wide area networks (WAN) (e.g., the Internet), public networks, private networks, virtual networks, mesh networks, peer-to-peer networks, and/or other interconnected data paths across which multiple devices may communicate. In embodiments, the network 106 is coupled to or includes portions of a telecommunications network for sending data in a variety of different communication protocols. In some implementations, the network 106 includes Bluetooth^{®} communication networks or a cellular communications network for sending and receiving data including via short messaging service (SMS), multimedia messaging service (MMS), hypertext transfer protocol (HTTP), direct data connection, WAP, email, and the like.

The AI assistant service 102 is implemented as a cloud-based service or set of services. To this end, AI assistant service 102 includes at least one server 108 which is configured to provide computational and/or storage resources for implementing the AI assistant service 102. The server 108 is representative of any physical or virtual computing system, device, or collection thereof, such as, a web server, rack server, blade server, virtual machine server, or tower server, as well as any other type of computing system. In various implementations, the server 108 is implemented in a data center, a virtual data center, or some other suitable facility. Server 108 executes one or more software applications, modules, components, or collection thereof capable of providing the AI service to clients, such as client devices 104. In various implementations, server 108 hosts data and/or content in connection with the AI assistant service 102 and makes this data and/or content available to the users of client devices 104 via the network 106. Program code, instructions, user data and/or content for the AI assistant service 102 is stored in a data store 110. Although a single server 108 and data store 110 are shown in FIG. 1, AI assistant service 102 may utilize any suitable number of servers and/or data stores.

Client devices 104 enable users to access and interact with the AI assistant service 102. The client devices 104 may include any suitable type of computing device, such as personal computers, desktop computers, laptop computers, mobile telephones, smart phones, tablets, phablets, smart watches, wearable computers, gaming devices/computers, televisions, and the like. Each client device 104 includes at least one client application 112 that is executed on the client device 104 for interacting with the AI assistant service 102. In some implementations, the client application 112 is a local content editing application, such as a word processor, spreadsheet application, presentation authoring application, email client, and/or the like, that is capable of communicating and interact with the AI assistant service 102. In other implementations, the client application 112 is a web browser that enables access to web-based application(s) implemented by the AI assistant service 102.

The AI assistant service 102 is configured to perform tasks or services for users of client devices 104 in response to receiving natural language queries or prompts. To this end, AI assistant service 102 includes at least one AI assistant model 114 for processing user queries and requests for assistance received from the client devices 104. AI assistant model 114 is trained to answer questions, summarize content, set reminders, send messages, and search the internet, obtain directions, find commercial establishments (e.g., restaurants and businesses), among other functions. Any suitable number and type of AI models may be utilized. In various implementations, the AI assistant model 114 is implemented using a generative AI model, such as an LLM.

The client devices 104 include an AI assistant client 116 for accessing functionality provided by the AI assistant service 102. The AI assistant client 116 provides a user interface for receiving queries and prompts from users of client devices and delivers the queries and prompts to the AI assistant service 102. AI assistant client 116 receives responses from the AI assistant service 102 which are generated in response to the queries and causes the responses to be displayed at the client device. The AI assistant client 116 is a software application, module, component, or collection thereof which is capable of interacting with the AI assistant service 102. In one implementation, the AI assistant client 116 is implemented as an integrated feature or component of a software application, such as client application 112. In other implementations, the AI assistant client 116 is implemented as a standalone software application programmed to communicate and interact with the AI assistant service 102.

To enhance the functionality of the AI assistant service 102, the instant disclosure provides an AUR system 118 which enables queries for the generative assistant AI to be augmented with only relevant user information and query context. The AUR system 118 utilizes one or more AI models (explained in more detail below) to process each query to determine the query context and to retrieve user information from the user information repository which is relevant to the query. For example, a context determining model may be trained to learn rules for determining the context (e.g., intent or purpose) of a query, and an information retrieval model can be trained to learn rules for selecting relevant user information pertaining to a query based on the query context. The relevant user information is retrieved from a user information repository. The user information includes user information, such as birthday, place of birth, current residence, personal contacts, hobbies, interests, calendar events, personal schedule, and the like, and work-related information, such as employer, work contacts, work projects, work calendar, meeting schedule, and the like. Collected information can include user interactions with applications, documents generated or collaborated on by a user, user information posted to social media, communication information sent and received by a user (e.g., emails, messages, etc.), previous interactions with the AI assistant, responses to inquiries received from the AI assistant, data collected from other sources (e.g., third party sources), and the like.

Once the query context and relevant user information has been determined, the system generates instructions for the AI assistant for generating the response based on the query, query context, and the relevant user information. The instructions are generated with a formatting and structure that is understandable by the AI assistant. The AUR system may be implemented in the cloud, e.g., by AI assistant service 102 and/or as a separate service. The AUR system may also be implemented as a local application installed on a client device. In various implementations, the AUR system can be integrated into an AI assistant system, e.g., as a skill, as a prompt injection technique, and/or as part of an enterprise search service.

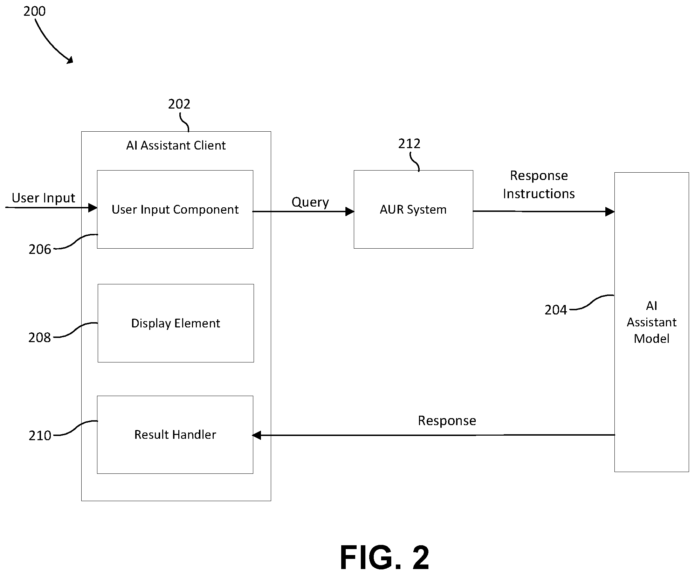

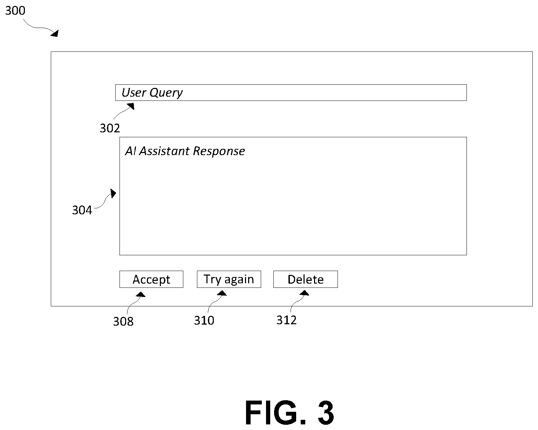

AI assistant service includes an AI assistant system for implementing the AI assistant service. An example implementation of an AI assistant system 200 is shown in FIG. 2. The AI assistant system 200 includes an AI assistant client 202 and an AI assistant model 204. AI assistant client 202 includes a user input component 206, a response display element 208, and a result handler 210. User input component 206 receives user input defining a user query for the AI assistant model 204. The result handler 210 receives the output of the AI assistant model 204 that is generated in response to the user query and causes the output to be displayed in the response display element 208. An example implementation of an AI assistant client 300 of an AI assistant system is shown in FIG. 3. The AI assistant client 300 includes a user input control 302 for receiving user input in the form of text which defines a user query or request for assistance from the AI assistant service. User input may be provided via a user input device, such as a keyboard, touch input, voice input, and the like. As a user provides user input, the AI assistant client 300 sends the input to the AI assistant system. AI assistant client 300 also includes a response display element 304 for displaying responses and other information returned by the AI assistant system. The AI assistant client 300 may also include other UI controls, such as UI controls 308, 310, 312 which enable a user to accept a digital assistant response, request that the digital assistant try again to generate a response, and delete a response, respectively.

Referring again to FIG. 2, the AI assistant system 200 includes at least one AI assistant model 204 for processing user queries received from the digital assistant client 202, performing tasks based on the queries, and generating responses which are returned to the AI assistant client 202. AI assistant model 204 is trained to answer questions, summarize content, set reminders, send messages, and search the internet, among other functions. In various implementations, the AI assistant model 204 includes a generative AI model, such as an LLM, although any suitable AI model may be used. The AI assistant system 200 includes an AUR system 212 which receives the query from the AI assistant client 202 and processes the query to determine the query context and then retrieves relevant user information for the query based on the determined query context. The AUR system 212 then generates instructions for the AI assistant model 204 based on the query, the query context, and the relevant user information.

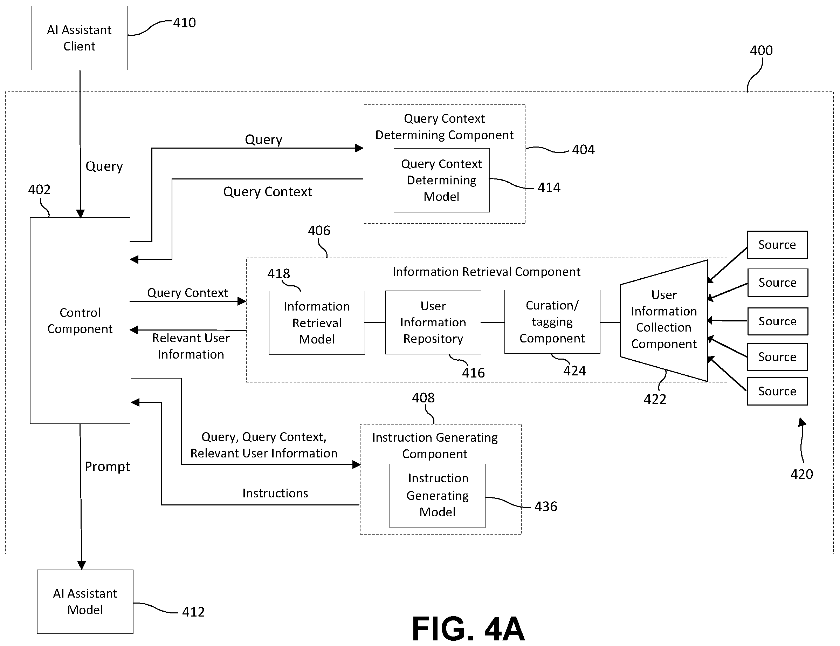

An example implementation of an AUR system 400 is shown in FIG. 4A. The AUR system 400 includes a control component 402, a query context determining component 404, a user information retrieval component 406, and an instruction generating component 408. The control component 402 receives the user query from the AI assistant client 410 and controls the transfer of relevant data to the other components of the system to identify the query context, select relevant user information, and generate instructions for the AI assistant. In particular, the control component 402 provides the query to the query context determining component 404 which returns the query context for the query. The query context can comprise a natural language description of the purpose or intent of the query. The control component 402 then provides the query context to the user information retrieval component 406 which returns relevant user information for the query based on the query context. The control component 402 then provides the query, the determined query context, and the selected relevant user information to the instruction generating component 408 which generates instructions for the AI assistant model 412 with reference to the query, the query context, and the relevant user information. The control component 402 receives the instructions from the instructions generating component and delivers the instructions to the AI assistant model 412. The AI assistant model generates a response based on the instructions and returns the response to the AI assistant client 410.

The query context determining component 404 includes a query context determining model 414 which is a generative AI model trained to process queries and to determine user intent and/or context associated with a given query, query term, or combination of terms. To this end, the query context determining model 414 is trained to learn rules for identifying the context of queries. For example, given a query such as "find a good movie to take my kids to go see," the model may be trained to determine the query context as "the user is planning on taking their kids to see a movie (tonight or within the next few days) that is being shown at a theater that is within a reasonable distance from the user's home address, that is appropriately rated for kids to see, and that has good reviews." Any suitable generative AI model may be used to implement the query context determining model, such as an LLM.

The determined query context is then provided to the information retrieval component 406. The information retrieval component 406 includes a user information repository 416 and a user information retrieval model 418. The user information repository 416 comprises one or more data stores which store information pertaining to the user which provided the query. The user information repository 416 may include any suitable type of memory devices, storage devices, and the like that enable storage and retrieval of user information. The user information is collected from one or more sources 420 by a user information collection component 422. The user information collection component 422 may be able to collect user information in any suitable manner. In various implementations, the user information collection component 422 is programmed to interact with various software applications via Application Programming Interfaces (APIs) of the applications to define the functions, commands, variables, and the like for causing the applications to generate and send user information to the AUR system. The user information collection component 422 may also include an API which defines the functions, commands, variables, and the like for designating parameters for data collection, such as applications and/or locations from which to collect information, types of information to collect, and the like. The user information collection component 422 may be a component of the AUR system 400 or may be a separate component from the AUR system 400, such as an enterprise data collection service which is utilized to collect user information across an enterprise or organization.

In the implementation of FIG. 4A, the user information stored in the user information repository comprises a curated collection of user information. To this end, the AUR system 400 includes a curation component 424 for implementing a curation process for the user information. The curation process can include collecting and retaining user information based on user preferences, limiting the user information stored in user information repository to certain predefined topics, removing stale information, removing duplicative and/or conflicting information, and the like. The curation process can include requesting information from the user regarding topics of interest, skills, expertise, hobbies, and the like. The curation process results in the user information repository forming a dynamic user profile that collects and organizes user information and which can be continuously updated and further curated as new information is generated and collected. The curation process can be configured to comply with applicable user privacy guidelines/regulations.

In various implementations, the curation component 424 can include a curation model which is trained to correlate information items to user information topics and categories. To facilitate searching of the user information, the system may be configured to tag the user information with one or more tags indicative of the topic, category, or the like to which the information pertains. Tags are labels or identifiers associated with information which are used by the system to categorize, describe, and organize the information for the system. In various implementations, tags are based on one or more predefined types, e.g., contact, calendar, task, event, etc. Information may be tagged as it is being curated by the curation component 424. Alternatively, the information may be tagged by a separate tagging component. Tags may be generated as needed based on collected user information and can include information such as contact names, specific dates pertaining to events and/or tasks, etc., and any other label or designation which can be used by the system to categorize and organize information. Tags may be stored with the user information items, e.g., as metadata, or stored in a separate data structure in association with the user information items to which they are assigned. Once user information has been curated and tagged, the user information is stored in the user information repository 416.

In the implementation of FIG. 4A, the information retrieval model is trained to process the query context to identify tags which are relevant to the query context and retrieve user information from the user information repository 416 having the identified tags. To this end, the information retrieval model 418 is trained to learn rules for associating query terms or combinations of terms with user information tags. The information retrieval model 418 may be implemented using any suitable AI or machine learning (ML) model, algorithm or technique.

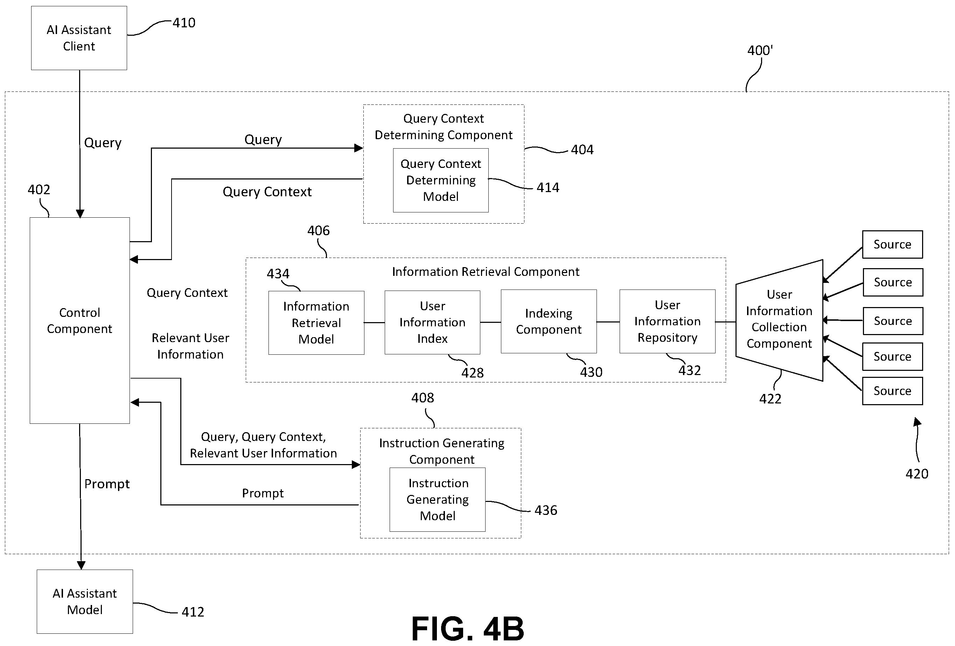

As an alternative to the use of a curated user information repository, an AUR system may use an indexing system to generate a user information index and to use the index to identify relevant user information, as shown in FIG. 4B. In the AUR system 400' of FIG. 4B, user information is stored in a user information repository 432 (with or without curation). An indexing component 430 is then used to generate a user information index 428 offline by mapping the user information to an embedding space using an encoder, such as a transformer-based encoder, or other suitable machine learning (ML) or artificial intelligence (AI) model/algorithm. In this implementation, the information retrieval model 434 includes an encoder (not shown) for encoding the query context to generate a query context embedding which maps the query context to the same embedding space as the user information index. The embeddings are generated in a manner that enables the similarities between user information and user queries to be represented by the distances between embeddings. The information retrieval model 434 then compares the query context embedding to the index 428 to identify relevant user information, e.g., based on cosine similarity.

The instruction generating component 408 includes a instruction generating model 436 which is trained to generate prompts for the AI assistant model 412 with reference to the query, the query context, and the relevant user information. In some implementations, the instruction generating model 436 is used to generate instructions for the AI assistant model based on the query context and relevant user information for causing the AI assistant model 412 to generate a response that satisfies the original query, including what information to search for to generate the response, how to use the user information in generating the response, and how to present the response. The instructions may be generated as a prompt and with the formatting and structure required by the AI assistant model 412. In various implementations, the instruction generating model 436 comprises a generative language model, such as an LLM.

Some examples which demonstrate how the AUR system can be used to enhance interactions with and improve responses from an AI assistant model will now be described. As one example, a user may query the AI assistant model to "Find a restaurant for me and my family for lunch." The AUR system can process the query and determine user information which is relevant to the query. For example, in this case, user information, such as family details (e.g., how many family members, ages of family members, etc.), residence address, diet information, past restaurant choices, and the like, may be determined to be relevant to the query. Once relevant user information has been identified, the AUR system turns this raw information into a set of instructions for the AI assistant which describe how to personalize the response or required searches to ensure the final response is personalized. As another example, a user may ask the AI assistant model to "summarize a [certain document (e.g., docx file)] for me." In this case, the AUR system can determine relevant user information to include with the query such as user conditions which can impact how information is processed (e.g., dyslexia), whether or not the user has viewed and/or collaborated on the document before, the purpose of the document (e.g., work or school project), user skills and expertise, the user's current work and focuses, and the like. As an example, a user may ask the AI assistant model to "Find a hotel for me to stay at when I am in Oslo next week." The AUR system can determine relevant user information, such as past hotel choices in Oslo, characteristics of past visits, whether or not a vehicle was rented during prior visits, whether or not family members travelled with the user to Oslo and the like. The AUR system can then generate instructions for causing the AI assistant to search for hotels in Oslo based on this information. User information can be used by the AUR system to generate instructions which not only define how the response should be generated but how the response should be presented to the user. For example, if the user is dyslexic, the AUR system can generate instructions that cause the AI assistant to generate the response with short bullet points and clear formatting in order to make the response easier to view by the user). The instruction in this case can include wording such as "The user is dyslexic, hence, ensure you put your response in short sentences in separate lines".

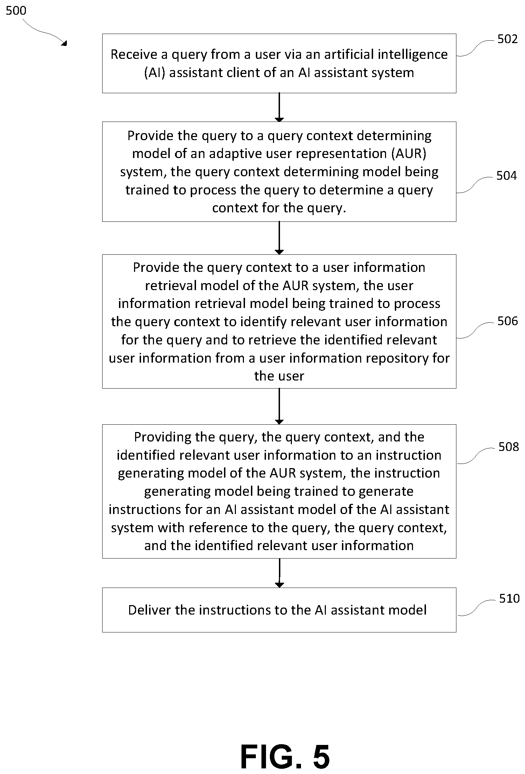

FIG. 5 shows a flowchart of an example method 500 of generating instructions for generative AI and AI assistants using the AUR system described above. The method begins with receiving a query from a user via an AI assistant client of an AI assistant system (block 502). The query is provided to a query context determining model of an adaptive user representation (AUR) system (block 504). The query context determining model is trained to process the query to determine a query context for the query. The query context is then provided to a user information retrieval model of the AUR system (block 506). The user information retrieval model is trained to process the query context to identify relevant user information for the query and to retrieve the identified relevant user information from a user information repository for the user. The query, the query context, and the identified relevant user information is then provided to an instruction generating model of the AUR system (block 508). The instruction generating model is trained to generate instructions for an AI assistant model of the AI assistant system to generate a response to the query with reference to the query, the query context, and the identified relevant user information. The instructions is then delivered to the AI assistant model (block 510).

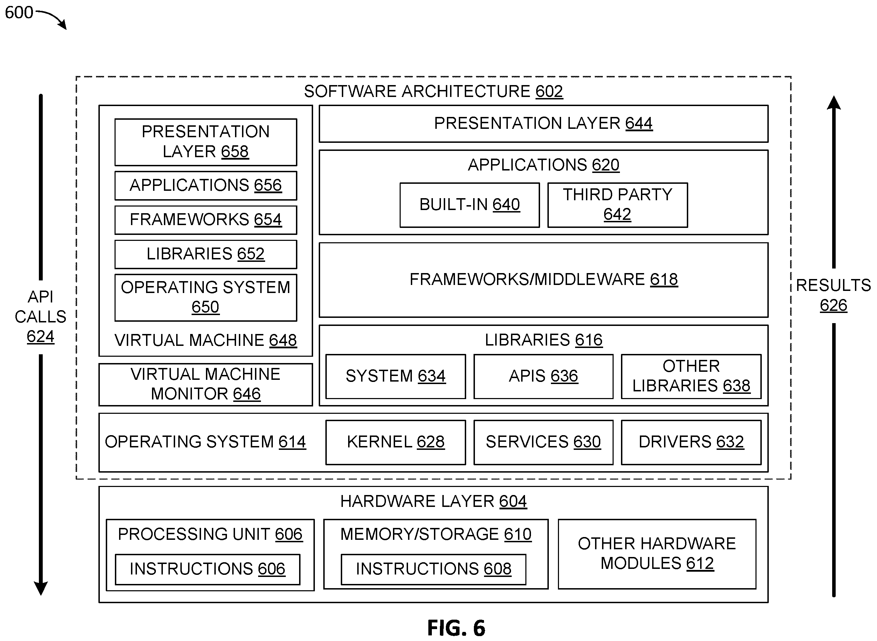

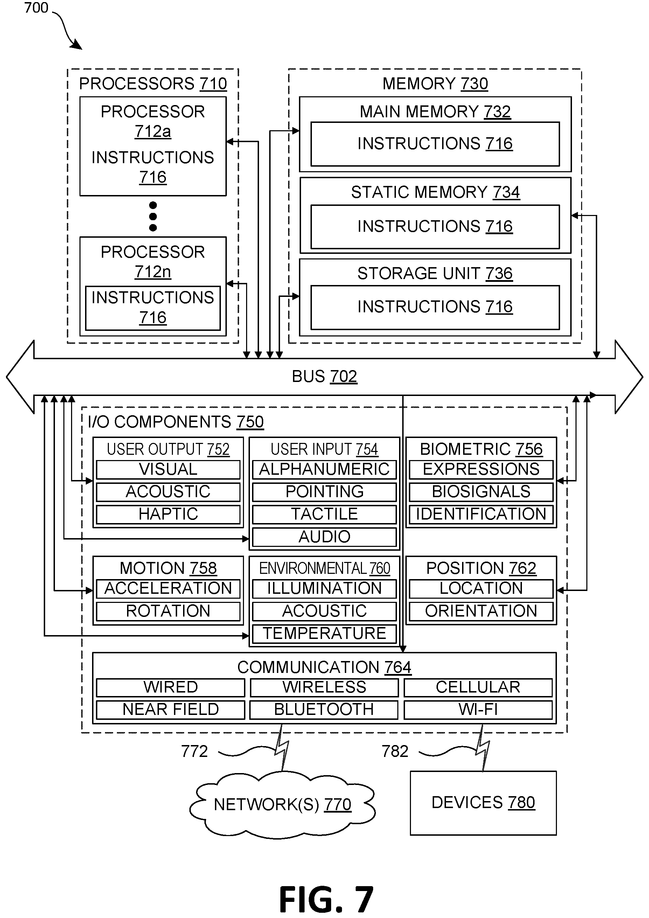

FIG. 6 is a block diagram 600 illustrating an example software architecture 602, various portions of which may be used in conjunction with various hardware architectures herein described, which may implement any of the above-described features. FIG. 6 is a nonlimiting example of a software architecture, and it will be appreciated that many other architectures may be implemented to facilitate the functionality described herein. The software architecture 602 may execute on hardware such as a machine 700 of FIG. 7 that includes, among other things, processors 710, memory 730, and input/output (I/O) components 750. A representative hardware layer 604 is illustrated and can represent, for example, the machine 700 of FIG. 7. The representative hardware layer 604 includes a processing unit 606 and associated executable instructions 608. The executable instructions 608 represent executable instructions of the software architecture 602, including implementation of the methods, modules and so forth described herein. The hardware layer 604 also includes a memory/storage 610, which also includes the executable instructions 608 and accompanying data. The hardware layer 604 may also include other hardware modules 612. Instructions 608 held by processing unit 606 may be portions of instructions 608 held by the memory/storage 610.

The example software architecture 602 may be conceptualized as layers, each providing various functionality. For example, the software architecture 602 may include layers and components such as an operating system (OS) 614, libraries 616, frameworks 618, applications 620, and a presentation layer 644. Operationally, the applications 620 and/or other components within the layers may invoke API calls 624 to other layers and receive corresponding results 626. The layers illustrated are representative in nature and other software architectures may include additional or different layers. For example, some mobile or special purpose operating systems may not provide the frameworks/middleware 618.

The OS 614 may manage hardware resources and provide common services. The OS 614 may include, for example, a kemel 628, services 630, and drivers 632. The kernel 628 may act as an abstraction layer between the hardware layer 604 and other software layers. For example, the kernel 628 may be responsible for memory management, processor management (for example, scheduling), component management, networking, security settings, and so on. The services 630 may provide other common services for the other software layers. The drivers 632 may be responsible for controlling or interfacing with the underlying hardware layer 604. For instance, the drivers 632 may include display drivers, camera drivers, memory/storage drivers, peripheral device drivers (for example, via Universal Serial Bus (USB)), network and/or wireless communication drivers, audio drivers, and so forth depending on the hardware and/or software configuration.

The libraries 616 may provide a common infrastructure that may be used by the applications 620 and/or other components and/or layers. The libraries 616 typically provide functionality for use by other software modules to perform tasks, rather than rather than interacting directly with the OS 614. The libraries 616 may include system libraries 634 (for example, C standard library) that may provide functions such as memory allocation, string manipulation, file operations. In addition, the libraries 616 may include API libraries 636 such as media libraries (for example, supporting presentation and manipulation of image, sound, and/or video data formats), graphics libraries (for example, an OpenGL library for rendering 2D and 3D graphics on a display), database libraries (for example, SQLite or other relational database functions), and web libraries (for example, WebKit that may provide web browsing functionality). The libraries 616 may also include a wide variety of other libraries 638 to provide many functions for applications 620 and other software modules.

The frameworks 618 (also sometimes referred to as middleware) provide a higher-level common infrastructure that may be used by the applications 620 and/or other software modules. For example, the frameworks 618 may provide various graphic user interface (GUI) functions, high-level resource management, or high-level location services. The frameworks 618 may provide a broad spectrum of other APIs for applications 620 and/or other software modules.

The applications 620 include built-in applications 640 and/or third-party applications 642. Examples of built-in applications 640 may include, but are not limited to, a contacts application, a browser application, a location application, a media application, a messaging application, and/or a game application. Third-party applications 642 may include any applications developed by an entity other than the vendor of the particular platform. The applications 620 may use functions available via OS 614, libraries 616, frameworks 618, and presentation layer 644 to create user interfaces to interact with users.

Some software architectures use virtual machines, as illustrated by a virtual machine 648. The virtual machine 648 provides an execution environment where applications/modules can execute as if they were executing on a hardware machine (such as the machine 700 of FIG. 7, for example). The virtual machine 648 may be hosted by a host OS (for example, OS 614) or hypervisor, and may have a virtual machine monitor 646 which manages operation of the virtual machine 648 and interoperation with the host operating system. A software architecture, which may be different from software architecture 602 outside of the virtual machine, executes within the virtual machine 648 such as an OS 650, libraries 652, frameworks 654, applications 656, and/or a presentation layer 658.

FIG. 7 is a block diagram illustrating components of an example machine 700 configured to read instructions from a machine-readable medium (for example, a machine-readable storage medium) and perform any of the features described herein. The example machine 700 is in a form of a computer system, within which instructions 716 (for example, in the form of software components) for causing the machine 700 to perform any of the features described herein may be executed. As such, the instructions 716 may be used to implement modules or components described herein. The instructions 716 cause unprogrammed and/or unconfigured machine 700 to operate as a particular machine configured to carry out the described features. The machine 700 may be configured to operate as a standalone device or may be coupled (for example, networked) to other machines. In a networked deployment, the machine 700 may operate in the capacity of a server machine or a client machine in a server-client network environment, or as a node in a peer-to-peer or distributed network environment. Machine 700 may be embodied as, for example, a server computer, a client computer, a personal computer (PC), a tablet computer, a laptop computer, a netbook, a set-top box (STB), a gaming and/or entertainment system, a smart phone, a mobile device, a wearable device (for example, a smart watch), and an Internet of Things (IoT) device. Further, although only a single machine 700 is illustrated, the term "machine" includes a collection of machines that individually or jointly execute the instructions 716.

The machine 700 may include processors 710, memory 730, and I/O components 750, which may be communicatively coupled via, for example, a bus 702. The bus 702 may include multiple buses coupling various elements of machine 700 via various bus technologies and protocols. In an example, the processors 710 (including, for example, a central processing unit (CPU), a graphics processing unit (GPU), a digital signal processor (DSP), an ASIC, or a suitable combination thereof) may include one or more processors 712a to 712n that may execute the instructions 716 and process data. In some examples, one or more processors 710 may execute instructions provided or identified by one or more other processors 710. The term "processor" includes a multi-core processor including cores that may execute instructions contemporaneously. Although FIG. 7 shows multiple processors, the machine 700 may include a single processor with a single core, a single processor with multiple cores (for example, a multi-core processor), multiple processors each with a single core, multiple processors each with multiple cores, or any combination thereof. In some examples, the machine 700 may include multiple processors distributed among multiple machines.

The memory/storage 730 may include a main memory 732, a static memory 734, or other memory, and a storage unit 736, both accessible to the processors 710 such as via the bus 702. The storage unit 736 and memory 732, 734 store instructions 716 embodying any one or more of the functions described herein. The memory/storage 730 may also store temporary, intermediate, and/or long-term data for processors 710. The instructions 716 may also reside, completely or partially, within the memory 732, 734, within the storage unit 736, within at least one of the processors 710 (for example, within a command buffer or cache memory), within memory at least one of I/O components 750, or any suitable combination thereof, during execution thereof. Accordingly, the memory 732, 734, the storage unit 736, memory in processors 710, and memory in I/O components 750 are examples of machine-readable media.

As used herein, "machine-readable medium" refers to a device able to temporarily or permanently store instructions and data that cause machine 700 to operate in a specific fashion, and may include, but is not limited to, random-access memory (RAM), read-only memory (ROM), buffer memory, flash memory, optical storage media, magnetic storage media and devices, cache memory, network-accessible or cloud storage, other types of storage and/or any suitable combination thereof. The term "machine-readable medium" applies to a single medium, or combination of multiple media, used to store instructions (for example, instructions 716) for execution by a machine 700 such that the instructions, when executed by one or more processors 710 of the machine 700, cause the machine 700 to perform and one or more of the features described herein. Accordingly, a "machine-readable medium" may refer to a single storage device, as well as "cloud-based" storage systems or storage networks that include multiple storage apparatus or devices. The term "machine-readable medium" excludes signals per se.

The I/O components 750 may include a wide variety of hardware components adapted to receive input, provide output, produce output, transmit information, exchange information, capture measurements, and so on. The specific I/O components 750 included in a particular machine will depend on the type and/or function of the machine. For example, mobile devices such as mobile phones may include a touch input device, whereas a headless server or IoT device may not include such a touch input device. The particular examples of I/O components illustrated in FIG. 7 are in no way limiting, and other types of components may be included in machine 700. The grouping of I/O components 750 are merely for simplifying this discussion, and the grouping is in no way limiting. In various examples, the I/O components 750 may include user output components 752 and user input components 754. User output components 752 may include, for example, display components for displaying information (for example, a liquid crystal display (LCD) or a projector), acoustic components (for example, speakers), haptic components (for example, a vibratory motor or force-feedback device), and/or other signal generators. User input components 754 may include, for example, alphanumeric input components (for example, a keyboard or a touch screen), pointing components (for example, a mouse device, a touchpad, or another pointing instrument), and/or tactile input components (for example, a physical button or a touch screen that provides location and/or force of touches or touch gestures) configured for receiving various user inputs, such as user commands and/or selections.

In some examples, the I/O components 750 may include biometric components 756, motion components 758, environmental components 760, and/or position components 762, among a wide array of other physical sensor components. The biometric components 756 may include, for example, components to detect body expressions (for example, facial expressions, vocal expressions, hand or body gestures, or eye tracking), measure biosignals (for example, heart rate or brain waves), and identify a person (for example, via voice-, retina-, fingerprint-, and/or facial-based identification). The motion components 758 may include, for example, acceleration sensors (for example, an accelerometer) and rotation sensors (for example, a gyroscope). The environmental components 760 may include, for example, illumination sensors, temperature sensors, humidity sensors, pressure sensors (for example, a barometer), acoustic sensors (for example, a microphone used to detect ambient noise), proximity sensors (for example, infrared sensing of nearby objects), and/or other components that may provide indications, measurements, or signals corresponding to a surrounding physical environment. The position components 762 may include, for example, location sensors (for example, a Global Position System (GPS) receiver), altitude sensors (for example, an air pressure sensor from which altitude may be derived), and/or orientation sensors (for example, magnetometers).

The I/O components 750 may include communication components 764, implementing a wide variety of technologies operable to couple the machine 700 to network(s) 770 and/or device(s) 780 via respective communicative couplings 772 and 782. The communication components 764 may include one or more network interface components or other suitable devices to interface with the network(s) 770. The communication components 764 may include, for example, components adapted to provide wired communication, wireless communication, cellular communication, Near Field Communication (NFC), Bluetooth communication, Wi-Fi, and/or communication via other modalities. The device(s) 780 may include other machines or various peripheral devices (for example, coupled via USB).

In some examples, the communication components 764 may detect identifiers or include components adapted to detect identifiers. For example, the communication components 764 may include Radio Frequency Identification (RFID) tag readers, NFC detectors, optical sensors (for example, one- or multi-dimensional bar codes, or other optical codes), and/or acoustic detectors (for example, microphones to identify tagged audio signals). In some examples, location information may be determined based on information from the communication components 764, such as, but not limited to, geo-location via Internet Protocol (IP) address, location via Wi-Fi, cellular, NFC, Bluetooth, or other wireless station identification and/or signal triangulation.

The present disclosure is supplemented by the following examples.

Example 1: A data processing system for personalizing queries comprising: a processor; and a memory in communication with the processor, the memory comprising executable instructions that, when executed by the processor alone or in combination with other processors, cause the data processing system to perform functions of: receiving a query from a user via an artificial intelligence (AI) assistant client of an AI assistant system; providing the query to a query context determining model of an adaptive user representation (AUR) system, the query context determining model being trained to process the query to determine a query context for the query; providing the query context to a user information retrieval model of the AUR system, the user information retrieval model being trained to process the query context to identify relevant user information for the query and to retrieve the identified relevant user information from a user information repository for the user; providing the query, the query context, and the identified relevant user information to an instruction generating model of the AUR system which is trained to generate instructions for an AI assistant model of the AI assistant system with reference to the query, the query context, and the identified relevant user information; and delivering the instructions to the AI assistant model, the AI assistant model being trained to process the instructions to generate a response to the query.

Example 2: The data processing system of Example 1, wherein the functions further comprise: collecting the user information pertaining to the user using a user information collection component, the user information being collected from at least one of user interactions with applications, documents generated or collaborated on by the user, user information posted to social media, communication information sent and received by the user, previous interactions with the AI assistant model, responses to inquiries received from the AI assistant model, and data collected from third other sources.

Example 3: The data processing system of Example 2, wherein the functions further comprise: performing a curation process on the collected user information such that the user information repository comprises a curated user information repository, the curation process being performed by a curation AI model which is trained to only select user information to include in the curated user information repository that is related to one or more predefined topics pertaining to the user, the curation model being trained to select the user information to include the curated user information repository portion of the collected user information based at least in part on user preferences.

Example 4: The data processing system of Example 3, wherein the instructions instruct the AI assistant model to do one or more of the following: what information to search for in generating the response, how to use the relevant user information in generating the response, and how to present the response based on the relevant user information.

Example 5: The data processing system of Example 4, wherein: the user information retrieval model is trained to process the query context to select the tags which are relevant to the query context, and the relevant user information is retrieved with reference to the selected tags.

Example 6: The data processing system of Example 3, wherein the functions further comprise: generating a user information index for the user information repository using an indexing component that maps the user information in the user information repository to an embedding space; generating a query context embedding using the user information retrieval model, the query context embedding mapping the query context to the embedding space to which the user information is mapped for the user information index; and comparing the query context embedding to the user information index using the user information retrieval model to identify the relevant user information.

Example 7: The data processing system of Example 1, wherein the AUR system is integrated into the AI assistant system as at least one of a skill, a prompt injection process, and a part of an enterprise search service.

Example 8: The data processing system of Example 1, wherein: the query, the query context, and the identified relevant user information comprises raw, unformatted data, and the instruction generating model is trained to transform the raw, unformatted data into the instructions.

Example 9: A method of augmenting queries to an Artificial Intelligence (AI) assistant system, the method comprising: receiving a query from a user via an artificial intelligence (AI) assistant client of the AI assistant system; providing the query to a query context determining model of an adaptive user representation (AUR) system, the query context determining model being trained to process the query to determine a query context for the query; providing the query context to a user information retrieval model of the AUR system, the user information retrieval model being trained to process the query context to identify relevant user information for the query and to retrieve the identified relevant user information from a user information repository for the user; providing the query, the query context, and the identified relevant user information to an instruction generating model of the AUR system which is trained to generate instructions for an AI assistant model of the AI assistant system with reference to the query, the query context, and the identified relevant user information; and delivering the prompt to the AI assistant model, the AI assistant model being trained to process the instructions to generate a response to the query.

Example 10: The method of Example 9, further comprising: collecting the user information pertaining to the user using a user information collection component, the user information being collected from at least one of user interactions with applications, documents generated or collaborated on by the user, user information posted to social media, communication information sent and received by the user, previous interactions with the AI assistant model, responses to inquiries received from the AI assistant model, and data collected from third other sources.

Example 11: The method of Example 10, further comprising: performing a curation process on the collected user information such that the user information repository comprises a curated user information repository, the curation process being performed by a curation AI model which is trained to only select user information to include in the curated user information repository that is related to one or more predefined topics pertaining to the user, the curation model being trained to select the user information to include the curated user information repository portion of the collected user information based at least in part on user preferences.

Example 12: The method of Example 11, wherein the instructions instruct the AI assistant model to do one or more of the following: what information to search for in generating the response, how to use the relevant user information in generating the response, and how to present the response based on the relevant user information.

Example 13: The method of Example 12, wherein: the user information retrieval model is trained to process the query context to select the tags which are relevant to the query context, and the relevant user information is retrieved with reference to the selected tags.

Example 14: The method of Example 11, further comprising: generating a user information index for the user information repository using an indexing component that maps the user information in the user information repository to an embedding space; generating a query context embedding using the user information retrieval model, the query context embedding mapping the query context to the embedding space to which the user information is mapped for the user information index; and comparing the query context embedding to the user information index using the user information retrieval model to identify the relevant user information.

Example 15: The method of Example 9, wherein the AUR system is integrated into the AI assistant system as at least one of a skill, a prompt injection process, and a part of an enterprise search service.

Example 16: The method of Example 9, wherein: the query, the query context, and the identified relevant user information comprises raw, unformatted data, and the instruction generating model is trained to transform the raw, unformatted data into the instructions.

Example 17: A non-transitory computer readable medium on which are stored instructions that, when executed, cause a programmable device to perform functions of: receiving a query from a user via an artificial intelligence (AI) assistant client of an AI assistant system; providing the query to a query context determining model of an adaptive user representation (AUR) system, the query context determining model being trained to process the query to determine a query context for the query; providing the query context to a user information retrieval model of the AUR system, the user information retrieval model being trained to process the query context to identify relevant user information for the query and to retrieve the identified relevant user information from a user information repository for the user; providing the query, the query context, and the identified relevant user information to an instruction generating model of the AUR system which is trained to generate instructions for an AI assistant model of the AI assistant system with reference to the query, the query context, and the identified relevant user information; and delivering the prompt to the AI assistant model, the AI assistant model being trained to process the prompt to generate a response to the query.

Example 18: The non-transitory computer readable medium of Example 17, wherein the functions further comprise: collecting the user information pertaining to the user using a user information collection component, the user information being collected from at least one of user interactions with applications, documents generated or collaborated on by the user, user information posted to social media, communication information sent and received by the user, previous interactions with the AI assistant model, responses to inquiries received from the AI assistant model, and data collected from third other sources; and performing a curation process on the collected user information such that the user information repository comprises a curated user information repository, the curation process being performed by a curation AI model which is trained to only select user information to include in the curated user information repository that is related to one or more predefined topics pertaining to the user, the curation model being trained to select the user information to include the curated user information repository portion of the collected user information based at least in part on user preferences; and tagging the user information with tags which correspond to the one or more predefined topics pertaining to the user using a tagging component.

Example 19: The non-transitory computer readable medium of Example 18, wherein: the user information retrieval model is trained to process the query context to select the tags which are relevant to the query context, and the relevant user information is retrieved with reference to the selected tags.

Example 20: The non-transitory computer readable medium of Example 17, wherein the AUR system is integrated into the AI assistant system as at least one of a skill, a prompt injection process, and a part of an enterprise search service.

An adaptive user representation (AUR) system for use with generative artificial intelligence (AI) receives queries meant for the generative AI and utilizes one or more AI models to process each query to determine query context and to identify user information from a user information repository which is relevant to the query. The system generates instructions based on the query, query context, and the relevant user information for causing the generative AI to generate a response to the query which is personalized to the user. The AUR system transforms the raw data of the query and relevant user information into a set of instructions for the generative AI which describe how to personalize the response or required searches to ensure the final response is personalized.

While various embodiments have been described, the description is intended to be exemplary, rather than limiting, and it is understood that many more embodiments and implementations are possible that are within the scope of the embodiments. Although many possible combinations of features are shown in the accompanying figures and discussed in this detailed description, many other combinations of the disclosed features are possible. Any feature of any embodiment may be used in combination with or substituted for any other feature or element in any other embodiment unless specifically restricted. Therefore, it will be understood that any of the features shown and/or discussed in the present disclosure may be implemented together in any suitable combination. Accordingly, the embodiments are not to be restricted except in light of the attached claims and their equivalents. Also, various modifications and changes may be made within the scope of the attached claims.

While the foregoing has described what are considered to be the best mode and/or other examples, it is understood that various modifications may be made therein and that the subject matter disclosed herein may be implemented in various forms and examples, and that the teachings may be applied in numerous applications, only some of which have been described herein. It is intended by the following claims to claim any and all applications, modifications and variations that fall within the true scope of the present teachings.

Unless otherwise stated, all measurements, values, ratings, positions, magnitudes, sizes, and other specifications that are set forth in this specification, including in the claims that follow, are approximate, not exact. They are intended to have a reasonable range that is consistent with the functions to which they relate and with what is customary in the art to which they pertain.

The scope of protection is limited solely by the claims that now follow. That scope is intended and should be interpreted to be as broad as is consistent with the ordinary meaning of the language that is used in the claims when interpreted in light of this specification and the prosecution history that follows and to encompass all structural and functional equivalents. Notwithstanding, none of the claims are intended to embrace subject matter that fails to satisfy the requirement of Sections 101, 102, or 103 of the Patent Act, nor should they be interpreted in such a way. Any unintended embracement of such subject matter is hereby disclaimed.

Except as stated immediately above, nothing that has been stated or illustrated is intended or should be interpreted to cause a dedication of any component, step, feature, object, benefit, advantage, or equivalent to the public, regardless of whether it is or is not recited in the claims.

It will be understood that the terms and expressions used herein have the ordinary meaning as is accorded to such terms and expressions with respect to their corresponding respective areas of inquiry and study except where specific meanings have otherwise been set forth herein. Relational terms such as first and second and the like may be used solely to distinguish one entity or action from another without necessarily requiring or implying any actual such relationship or order between such entities or actions. The terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus. An element proceeded by "a" or "an" does not, without further constraints, preclude the existence of additional identical elements in the process, method, article, or apparatus that comprises the element. Furthermore, subsequent limitations referring back to "said element" or "the element" performing certain functions signifies that "said element" or "the element" alone or in combination with additional identical elements in the process, method, article or apparatus are capable of performing all of the recited functions.

The Abstract of the Disclosure is provided to allow the reader to quickly ascertain the nature of the technical disclosure. It is submitted with the understanding that it will not be used to interpret or limit the scope or meaning of the claims. In addition, in the foregoing Detailed Description, it can be seen that various features are grouped together in various examples for the purpose of streamlining the disclosure. This method of disclosure is not to be interpreted as reflecting an intention that the claims require more features than are expressly recited in each claim. Rather, as the following claims reflect, inventive subject matter lies in less than all features of a single disclosed example. Thus, the following claims are hereby incorporated into the Detailed Description, with each claim standing on its own as a separately claimed subject matter.

## Claims

1. A data processing system for personalizing queries comprising:
a processor (710); and
a memory (730) in communication with the processor (710), the memory (730) comprising executable instructions (716) that, when executed by the processor (710) alone or in combination with other processors, cause the data processing system to perform functions of:
receiving (502) a query from a user via an artificial intelligence, AI, assistant client (202, 401) of an AI assistant system (200);
providing (504) the query to a query context determining model (414) of an adaptive user representation, AUR, system (400), the query context determining model (414) being trained to process the query to determine a query context for the query;
providing (506) the query context to a user information retrieval model (418) of the AUR system (400), the user information retrieval model (418) being trained to process the query context to identify relevant user information for the query and to retrieve the identified relevant user information from a user information repository (416) for the user;
providing (508) the query, the query context, and the identified relevant user information to an instruction generating model of the AUR system (400) which is trained to generate instructions for an AI assistant model (412) of the AI assistant system (200) with reference to the query, the query context, and the identified relevant user information; and
delivering (510) the instructions to the AI assistant model (412), the AI assistant model (412) being trained to process the instructions to generate a response to the query.

2. The data processing system of claim 1, wherein the functions further comprise:
collecting the user information pertaining to the user using a user information collection component, the user information being collected from at least one of user interactions with applications, documents generated or collaborated on by the user, user information posted to social media, communication information sent and received by the user, previous interactions with the AI assistant model, responses to inquiries received from the AI assistant model, and data collected from third other sources.

3. The data processing system of claim 2, wherein the functions further comprise:
performing a curation process on the collected user information such that the user information repository comprises a curated user information repository, the curation process being performed by a curation AI model which is trained to only select user information to include in the curated user information repository that is related to one or more predefined topics pertaining to the user, the curation model being trained to select the user information to include the curated user information repository portion of the collected user information based at least in part on user preferences.

4. The data processing system of claim 3, wherein the instructions instruct the **AI** assistant model to do one or more of the following:
what information to search for in generating the response;
how to use the relevant user information in generating the response; and
how to present the response based on the relevant user information.

5. The data processing system of claim 4, wherein:
the user information retrieval model is trained to process the query context to select the tags which are relevant to the query context; and
the relevant user information is retrieved with reference to the selected tags.

6. The data processing system of claim 3, wherein the functions further comprise:
generating a user information index for the user information repository using an indexing component that maps the user information in the user information repository to an embedding space;
generating a query context embedding using the user information retrieval model, the query context embedding mapping the query context to the embedding space to which the user information is mapped for the user information index; and
comparing the query context embedding to the user information index using the user information retrieval model to identify the relevant user information.

7. The data processing system of claim 1, wherein the AUR system is integrated into the AI assistant system as at least one of a skill, a prompt injection process, and a part of an enterprise search service.

8. The data processing system of claim 1, wherein:
the query, the query context, and the identified relevant user information comprises raw, unformatted data; and
the instruction generating model is trained to transform the raw, unformatted data into the instructions.

9. A method of augmenting queries to an Artificial Intelligence, AI, assistant system, the method comprising:
Receiving (502) a query from a user via an artificial intelligence, AI, assistant client (202, 401) of the AI assistant system (200);
providing (504) the query to a query context determining model (414) of an adaptive user representation, AUR, system (400), the query context determining model (414) being trained to process the query to determine a query context for the query;
providing (506) the query context to a user information retrieval model (418) of the AUR system (400), the user information retrieval model (418) being trained to process the query context to identify relevant user information for the query and to retrieve the identified relevant user information from a user information repository (416) for the user;
providing (508) the query, the query context, and the identified relevant user information to an instruction generating model of the AUR system (400) which is trained to generate instructions for an AI assistant model (412) of the AI assistant system (200) with reference to the query, the query context, and the identified relevant user information; and
delivering (510) the prompt to the AI assistant model (412), the AI assistant model (412) being trained to process the instructions to generate a response to the query.

10. The method of claim 9, further comprising:
collecting the user information pertaining to the user using a user information collection component, the user information being collected from at least one of user interactions with applications, documents generated or collaborated on by the user, user information posted to social media, communication information sent and received by the user, previous interactions with the AI assistant model, responses to inquiries received from the AI assistant model, and data collected from third other sources.

11. The method of claim 10, further comprising:
performing a curation process on the collected user information such that the user information repository comprises a curated user information repository, the curation process being performed by a curation AI model which is trained to only select user information to include in the curated user information repository that is related to one or more predefined topics pertaining to the user, the curation model being trained to select the user information to include the curated user information repository portion of the collected user information based at least in part on user preferences.

12. The method of claim 11, wherein the instructions instruct the AI assistant model to do one or more of the following:
what information to search for in generating the response;
how to use the relevant user information in generating the response; and
how to present the response based on the relevant user information.

13. The method of claim 12, wherein:
the user information retrieval model is trained to process the query context to select the tags which are relevant to the query context; and
the relevant user information is retrieved with reference to the selected tags.

14. A non-transitory computer readable medium on which are stored instructions that, when executed, cause a programmable device to perform functions of:
receiving (502) a query from a user via an artificial intelligence, AI, assistant client (202, 401) of an AI assistant system (200);
providing (504) the query to a query context determining model (414) of an adaptive user representation, AUR, system, the query context determining model (414) being trained to process the query to determine a query context for the query;
providing (506) the query context to a user information retrieval model (418) of the AUR system (400), the user information retrieval model (418) being trained to process the query context to identify relevant user information for the query and to retrieve the identified relevant user information from a user information repository (416) for the user;
providing (508) the query, the query context, and the identified relevant user information to an instruction generating model of the AUR system (400) which is trained to generate instructions for an AI assistant model (412) of the AI assistant system (200) with reference to the query, the query context, and the identified relevant user information; and
delivering (510) the prompt to the AI assistant model (412), the AI assistant model (412) being trained to process the prompt to generate a response to the query.

15. The non-transitory computer readable medium of claim 14, wherein the functions further comprise:
collecting the user information pertaining to the user using a user information collection component, the user information being collected from at least one of user interactions with applications, documents generated or collaborated on by the user, user information posted to social media, communication information sent and received by the user, previous interactions with the AI assistant model, responses to inquiries received from the AI assistant model, and data collected from third other sources; and
performing a curation process on the collected user information such that the user information repository comprises a curated user information repository, the curation process being performed by a curation AI model which is trained to only select user information to include in the curated user information repository that is related to one or more predefined topics pertaining to the user, the curation model being trained to select the user information to include the curated user information repository portion of the collected user information based at least in part on user preferences; and
tagging the user information with tags which correspond to the one or more predefined topics pertaining to the user using a tagging component.
